# EUROPÄISCHE PATENTSCHRIFT

(11) **EP 0 491 120 B1**
(45) Veröffentlichungstag und Bekanntmachung des Hinweises auf die Patenterteilung: **03.01.1996**
(21) Anmeldenummer: 91116105.7
(22) Anmeldetag: 21.09.1991
(51) Int. Cl.: B23D 53/04

(54) **Metallbandsäge**
Metal cutting band saw
Scie à ruban pour métaux

(30) Priorität: 18.12.1990 DE 4040470
(43) Veröffentlichungstag der Anmeldung: 24.06.1992
(73) Patentinhaber: MEBA MASCHINENBAU GMBH, D-72589 Westerheim (DE)
(72) Erfinder: Diener, Eberhard, W-7300 Esslingen (DE)
(74) Vertreter: Rüger, Rudolf, Dr.-Ing.

(56) Entgegenhaltungen:
- CA-A- 1 126 624
- DE-A- 2 405 992
- DE-C- 3 838 422
- FR-A- 2 421 027
- US-A- 2 556 670
- US-A- 3 570 346
- PATENT ABSTRACTS OF JAPAN vol. 11, no. 360 (M-645)(2807) 25. November 1987 & JP-A-62 136 315 ( DAITO SEIKI K.K. ) 19.Juni 1987 & JP- 136 315 * Zusammenfassung *

## Beschreibung

Die Erfindung betrifft eine Metallbandsäge mit den Merkmalen des Oberbegriffs des Anspruches 1.

Aus der DE-OS 24 O5 992 ist eine gattungsgemäße Metallbandsäge bekannt, die es gestattet, Gehrungsschnitte in beiden Richtungen auszuführen. Die bekannte Metallbandsäge weist ein Maschinengestell auf, in dem ein Sägerahmen beweglich gelagert ist. Der Sägerahmen kann bezüglich des Maschinengestells zur Einstellung von Gehrungsschnitten um eine vertikale Achse geschwenkt werden und zum Zustellen bei der Sägebewegung ist er um eine horizontale Achse schwenkbar. Bei der Verstellung des Gehrungsschnittwinkels ändert sich die Lage der horizontalen Schwenkachse entsprechend im Raum.

Der Sägerahmen enthält zwei achsparallel gelagerte-Umlenkrollen, um die ein endloses Sägeband herumläuft.

Um das Werkstück während des Sägevorganges zu halten, ist neben einer Seite des Sägerahmens ein Spannstock mit zwei Spannbacken angeordnet. Einer der beiden Spannbacken ist in dem Maschinengestell ortsfest gehaltert und seine Anlagefläche definiert eine Ebene, in der sich die vertikale Schwenkachse zur Einstellung des Gehrungsschnittwinkels befindet. Die andere Spannbacke ist längsverschieblich auf einem Spannstockbett gelagert, das seinerseits wiederum um eine vertikale Achse schwenkbar ist. Die Schwenkachse des Spannstockbettes fällt nicht mit der vertikalen Schwenkachse des Sägerahmens zusammen, sondern sie liegt,aus der Sicht des Werkstücks gesehen,hinter dem festen Spannbacken.

Der auf dem Bett geführte bewegliche Spannbacken ist außerdem um eine vertikale Achse drehbar, damit seine Spannfläche,unabhängig von der Schwenkstellung des Bettes, immer parallel zu der Spannfläche des festen Backens ausgerichtet werden kann.

Bei Gehrungsschnitten, bei denen der Sägerahmen in Richtung auf den Spannstock verschwenkt werden muß, schwenkt gleichzeitig um einen entsprechenden Betrag das Spannstockbett, damit der bewegliche Spannbacken nicht mit dem Sägerahmen kollidiert. Dadurch erhält aber das Spannstockbett eine schräge Lage bezüglich des Spannbackens und die Klemmung des Werkstücks wird wegen der zwangsläufig beim Sägevorgang auftretenden Erschütterungen unsicher, denn eine in Längsrichtung des Werkstückes wirkende Kraft, die bestrebt ist, das Werkstück von dem Spannstock in Richtung auf auf den Sägerahmen zu bewegen, führt zu einer Verminderung der Anpreßkraft.

Die DE-PS 38 38 422 zeigt eine Werkstückgreifvorrichtung zum automatischen Nachschub und Fixieren stangenförmiger Werkstücke für Trenn- oder Sägemaschinen. Das Werkstück liegt bei dieser bekannten Anordnung auf einem gestellfesten und ortsunveränderlichen Werkstückauflagetisch. Dieser enthält einen Drehtisch mit Schlitz, durch den von unten her ein Kreissägeblatt auftaucht, um das Werkstück abzuschneiden. Um das Werkstück vorzuschieben und zu halten, ist ein Spannstock vorgesehen, dessen Backen an einer oberhalb des Auflagetisches angeordneten Spannstockführung sitzen. Diese Spannstockführung ist mit Hilfe einer weiteren Längsführung parallel zu dem Werkstück verstellbar, um das Werkstück für den nächsten Schnitt nachziehen zu können. Außerdem ist hieran eine der Spannbacken befestigt. Die andere Spannbacke ist relativ zu der ersterwähnten Spannbacke beweglich, damit auch bei Gehrungsschnitten, die gegen die verstellbare Spannbacke gerichtet sind, beide Spannbacken möglichst dicht an das Sägeblatt herangebracht werden können.

Wegen des von oben kommenden Spannstocks kann das Vorratsmaterial nur von der Seite her eingeschoben werden. Ein Einlegen von oben ist nicht möglich.

Ausgehend hiervon ist es Aufgabe der Erfindung, eine horizontale Metallbandsäge zu schaffen, die einerseits die Verarbeitung von kleinen Werkstücken und Restlängen bis zu 6O mm erlaubt und bei der andererseits eine rüttelsichere Spannung bei allen Fällen von Gehrungsschnitten möglich ist, und zwar sowohl bei Gehrungsschnitten , bei denen der Sägerahmen von dem Vorratsmaterial weg als auch bei Gehrungsschnitten, bei denen der Sägerahmen auf das Vorratsmaterial zu verschwenkt wird, wobei in jedem Falle auch bei geöffneten Spannbacken das Werkstück unterstützt ist.

Diese Aufgabe wird erfindungsgemäß durch die Metallbandsäge mit den Merkmalen des Anspruches 1 gelöst.

Infolge der Beweglichkeit zumindest eines Teiles des Spannstocks besteht die Möglichkeit, den Schwenkträger zusammen mit dem Sägerahmen, ausgehend von der 9O^{o}-Stellung, in der das Werkstück längs einer Ebene abgetrennt wird, auf der die Längsachse des Werkstückes senkrecht steht, in beide Richtungen um einen begrenzten Schwenkwinkel verstellt werden kann. Eine Kollision des Sägerahmens mit dem Spannstock wird durch die teilweise Beweglichkeit des Spannstockes vermieden.

Andererseits gewährleistet der zumindest zum Teil bewegliche Spannstock,das Werkstück jederzeit möglichst dicht an dem Sägeband zu spannen, wobei in jedem Falle die Spannbacken des Spannstocks immer senkrecht aufeinander zu bewegt werden, wenn das Werkstück eingespannt wird. Schräg verlaufende Kraftkomponenten beim Spannen des Werkstücks treten im Spannstock auch bei Gehrungsschnitten nicht auf.

Die Verwendung des beweglichen Spannstocks kann sowohl bei Metallbandsägen verwendet werden, bei denen der Trägerrahmen um eine Horizontalachse schwenkbar ist, als auch bei solchen Metallbandsägen, bei denen der Sägerahmen längs einer Säule parallel geführt und so auf das Werkstück zugestellt wird.

Normalerweise ist es zweckmäßig, wenn ein Backen des Spannstocks eine Spannfläche aufweist, die in einer Ebene liegt, die zu der ersten Achse parallel ist. Dabei ergeben sich minimale Änderungen der Lage der einen Schnittkante, wenn die Ebene durch die Achse hindurchläuft.

Wenn die Spannfläche des einen Backens durch die Schwenkachse des Schwenkträgers hindurchläuft, genügt es, wenn von dem Spannstock lediglich der eine Backen verstellbar und der andere Backen ortsfest mit dem Maschinengestell verbunden ist. Hierdurch vereinfacht sich außerdem die Halterung und Lagerung, weil kleinere Massen bewegt werden.

Um die Schwenkbarkeit des Sägerahmens um die Vertikalachse nicht zu beeinträchtigen, ist vorzugsweise auch derjenige Auflagetisch verstellbar, der mit dem Spannstock zusammenwirkt. Dadurch ist es möglich, das Werkstück immer möglichst dicht an dem Sägeband zu unterstützen. Die konstruktiven Verhältnisse werden in diesem Falle sehr einfach, wenn dieser Auflagetisch von einem Teil des Spannstocks gebildet ist, beispielsweise dem Untergestellt des Spannstocks, in dem der bewegliche und zustellbare Backen geführt ist.

Die Längsführung für den verschiebbaren Teil des Spannstocks besteht bevorzugt aus zwei parallel mit Abstand zueinander angeordneten Führungsschienen, weil sich dadurch günstige Hebelverhältnisse und Belastungsverhältnisse einstellen. Die Beweglichkeit wird erleichtert, wenn zur Führung des beweglichen. Teils des Spannstocks Kugelführungen verwendet werden.

Um den beweglichen Teil des Spannstocks entsprechend der Einstellung des Schwenkträgers in die jeweils günstigste Position zu bringen, ist dem Spannstock eine Antriebseinrichtung zugeordnet. Die Antriebseinrichtung kann im einfachsten Falle von einer Kuppelstange gebildet sein, die den Schwenkträger mit dem beweglichen Teil des Spannstocks verbindet.

Um die Bewegung des Schwenkträgers nicht zu behindern, wenn der Schwenkträger in eine Lage gebracht wird, bei der der Sägerahmen eine Komponente aufweist, in der er von dem verstellbaren Spannstock weg weist, ist die Kuppelstange an einem Ende lediglich schwenkbar und an ihrem anderen Ende sowohl schwenkbar als auch begrenzt längsverschieblich angelenkt. Da die Verschieblichkeit der Kuppelstange nur unter bestimmten Einstellungen benötigt wird, sonst jedoch gegebenenfalls störend ist, ist zweckmäßigerweise in dem längsverschieblichen Bereich der Kuppelstange eine Rasteinrichtung vorgesehen, die ausrastet, sobald der Schwenkträger von dem Spannstock weggeschwenkt wird, damit der Spannstock in seiner Extremstellung stehen bleiben kann. Diese Rasteinrichtung besteht im einfachsten Falle aus einer Nut in der Kuppelstange und einer Kugelrasteinrichtung, die mit der Nut zusammenwirkt.

In der Zeichnung sind Ausführungsbeispiele des Gegenstandes der Erfindung dargestellt. Es zeigen:
- Fig. 1: eine Metallbandsäge in einer perspektivischen Darstellung, wobei der Sägerahmen auf einen Gehrungsschnitt eingestellt ist,
- Fig. 2: die Metallbandsäge nach Fig. 1 in einer Seitenansicht mit teilweise weggebrochenem, feststehendem Backen, wobei der Schwenkträger für einen 9O^{o}-Schnitt eingestellt ist,
- Fig. 3: die Metallbandsäge in der Einstellung nach Fig. 2, ebenfalls in einer Seitenansicht, jedoch von der anderen Seite,
- Fig. 4: die Metallbandsäge in der Einstellung gemäß Fig. 2 in einer Ansicht aus der Richtung des zuzuführenden Werkstücks mit geöffnetem Spannstock,
- Fig. 5: die Metallbandsäge in der Einstellung nach Fig. 2 ohne den Sägerahmen in einer Draufsicht,
- Fig. 6: die Anordnung nach Fig. 5, eingestellt für einen Gehrungsschnitt,
- Fig. 7: die Anordnung nach Fig. 6 unter zusätzlicher Veranschaulichung des Sägerahmens,
- Fig. 8: die Anordnung nach Fig. 5 in einer Einstellung des Schwenkträgers für einen Gehrungsschnitt mit entgegengesetzter Orientierung wie in Fig. 6,
- Fig. 9: die Anordnung nach Fig. 8 unter zusätzlicher Veranschaulichung des Sägerahmens und
- Fig. 10: ein Ausführungsbeispiel der erfindungsgemäßen Metallbandsäge mit automatischem Materialvorschub.

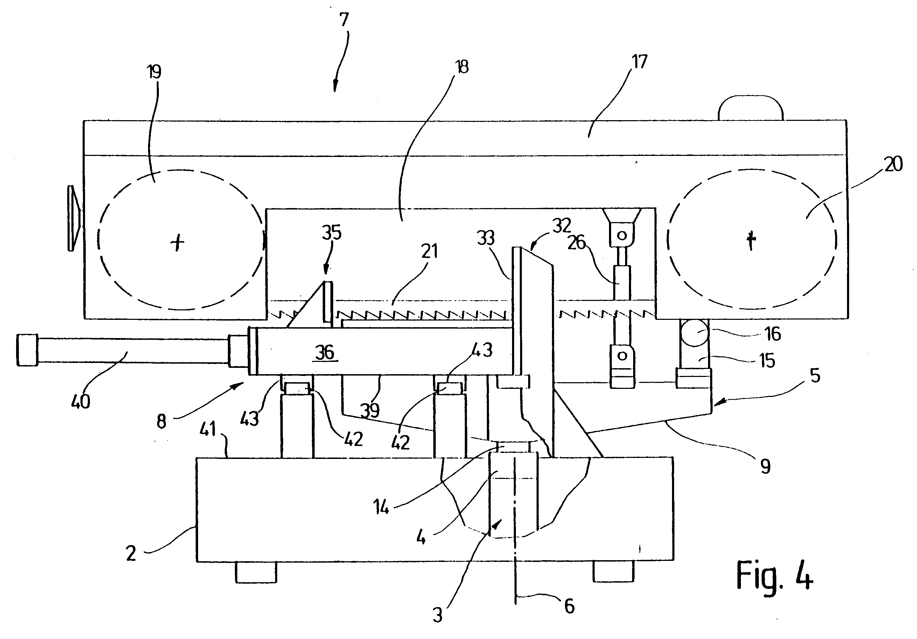

In der Zeichnung ist eine Metallbandsäge 1 veranschaulicht, die ein auf einer festen Unterlage aufzustellendes Maschinengestell 2 aufweist. Das Maschinengestell 2 ist eine kastenförmige Schweißkonstruktion und enthält in ihrem Inneren eine in Fig. 4 erkennbare Lagereinrichtung 3 mit zwei parallel zueinander ausgerichteten und übereinander befindlichen Lagern 4, von denen aus Darstellungsgründen lediglich eines erkennbar ist. Mit Hilfe der Lagereinrichtung 3 ist ein Schwenkträger 5 bezüglich einer Vertikalachse 6 in dem Maschinengestell 2 schwenkbar gelagert. Der Schwenkträger 5 dient seinerseits der Halterung eines Sägerahmens 7, mit dessen Hilfe ein in einen Spannstock 8 eingespanntes, nicht veranschaulichtes Werkstück abgelängt werden kann.

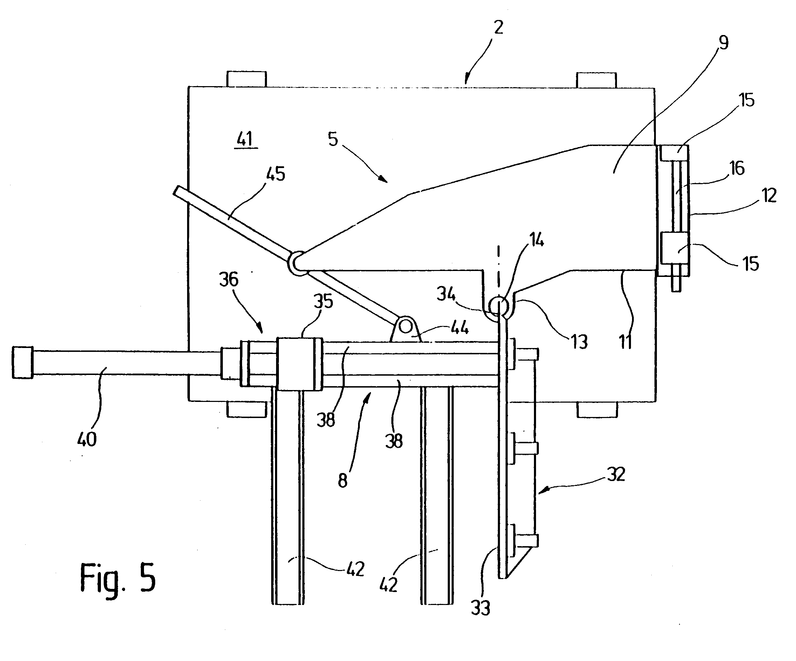

Im einzelnen weist der Schwenkträger 5 eine Plattform 9 auf, die in der Draufsicht, wie die Fig. 5, 6 und 8 erkennen lassen, etwa die Gestalt eines spitzen Dreiecks mit einer langen Kante 11 und einer kurzen Kante 12 hat. Die lange Kante 11 und die kurze Kante 12 verlaufen rechtwinklig zueinander. Etwa in der Mitte der langen Kante 11 ist die nach Art eines Balkens gestaltete Plattform 9 mit einem seitlich vorspringenden Fortsatz 12 versehen, in dem ein senkrecht nach unten weisender Lagerzapfen 14 gehaltert ist, der in der Lagereinrichtung 3 steckt. Neben der schmalen Kante 12 ragen von der Plattform 9 des Schwenkträgers 5 zwei mit Abstand voneinander angeordnete Lagerböcke 15 nach oben auf. Die Lagerböcke 15 dienen der Halterung einer Achse 16, mittels derer der Sägerahmen 7 mit dem Schwenkträger 5 schwenkbar verbunden ist. Die Schwenkachse, bezüglich der der Sägerahmen 7 an dem Schwenkträger 5 gehaltert ist, liegt horizontal und somit rechtwinklig zu der vertikalen ersten Achse 6. Beide Achsen schneiden sich jedoch nicht.

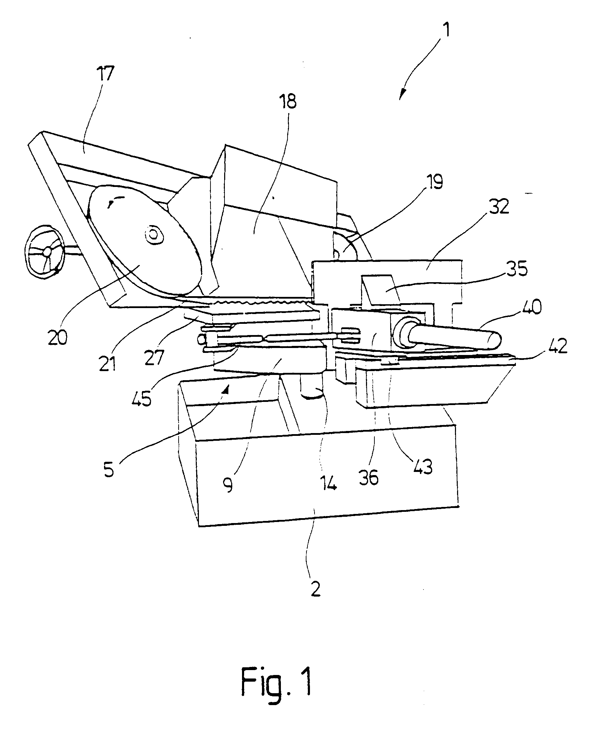

Der Sägerahmen 7 weist ein brückenartiges Kastengehäuse 17 auf, das etwa mittig einen Materialdurchlaß 18 enthält und das in Fig. 1 im geöffneten Zustand veranschaulicht ist. In dem brückenförmig gestalteten Gehäuse 17 sind achsparallel zueinander zwei Umlenkscheiben 19 und 2O drehbar gelagert, die sich beidseits des Materialdurchlasses 18 befinden. Die Achsen der beiden Umlenkscheiben 19 und 2O liegen schräg im Raum und sind also weder zu der Achse 16 noch zu der ersten Achse 6 parallel.

Um beide Umlenkscheiben 18 und 19 läuft ein endloses Sägeband 21 herum, das lediglich im Bereich des Materialdurchlasses an der Unterseite des Sägerahmens 7 frei liegt und ansonsten in dem Gehäuse 17 läuft. Mittels schematisch angedeuteter Bandführungen 22, die an einer nach oben weisenden Außenseite des Gehäuses 17 im Bereich des Materialdurchlasses 18 angebracht sind, wird das Sägeband 21 im Bereich des Materialdurchlasses 18 so verwunden, daß es dort senkrecht, also parallel zu der ersten Achse 6 und damit rechtwinklig zu der Achse 16 verläuft.

An der Rückseite des Gehäuses 17 ist ein Getriebemotor 23 angeflanscht, mit dessen Hilfe die Umlenkscheibe 2O in Umdrehungen versetzt werden kann, um das Sägeband 21 zu bewegen.

Die Verbindung zwischen dem Sägerahmen 7 und dem Schwenkträger 5 geschieht mit Hilfe eines ebenfalls an der Rückseite des Gehäuses 17 angebrachten Lagerteils 24, das in zwei nach unten weisenden Lagerböcken 25 ausläuft, durch die die Achse 16 hindurchführt. Das Lagerteil 26 sitzt außerhalb des Gehäuses 17 hinter der angetriebenen Scheibe 2O, so daß der Sägerahmen 7 mit einer Schwenkbewegung nach unten zugestellt werden kann, wobei der durch den Materialdurchlaß 18 hindurchlaufende Teil des Sägebandes 21 eine scherenförmige Bewegung vollführt, wie dies bei Kappsägen üblich ist.

Da der längliche Sägerahmen 7 wegen der Lagerung in der Nähe eines seiner Enden, nämlich in der Nähe der Umlenkscheibe 2O ein starkes Kippmoment aufweist, ist zum Unterstützen des Sägerahmens 7 eine Gasdruckfeder 26 vorgesehen, die sich einerseits an dem Gehäuse 17 im Bereich des Materialdurchlasses 18 und andererseits auf dem Schwenkträger 5 abstützt, um so das Gewicht des Sägerahmens 7 auszugleichen.

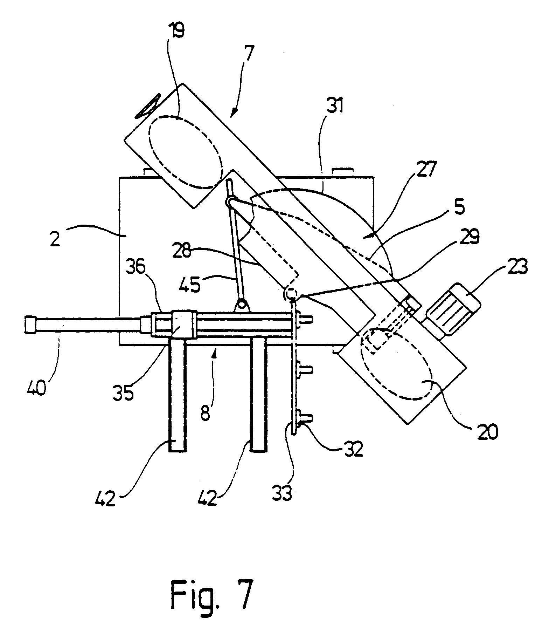

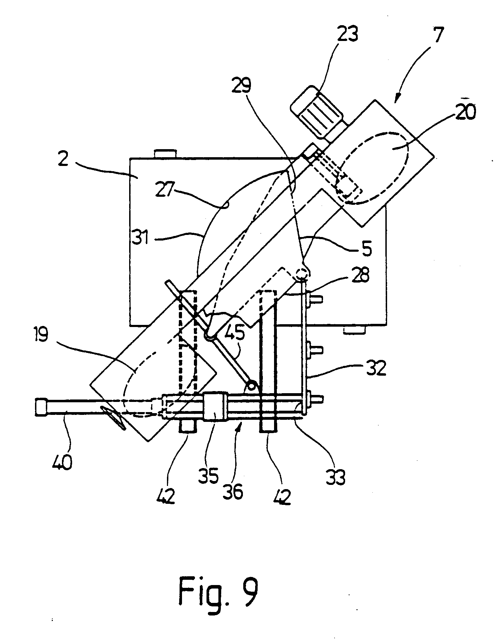

Damit ein abzulängendes Werkstück beidseits des Sägebandes 21 unterstützt wird, befindet sich auf dem Schwenkträger 5 ein Auflagetisch 27, dessen Gestalt in den Fig. 7 und 9 zu erkennen ist. Der Auflagetisch 27 hat in der Draufsicht etwa die Gestalt eines Kreissektors und wird von zwei geraden Kanten 28 und 29 sowie einer kreisförmig gekrümmten Kante 31 begrenzt. Die Spitze des sektorförmigen Auflagetisches 27 liegt in der Nähe der ersten Achse 6, während seine gerade Kante 28 sich parallel zu dem freiliegenden Abschnitt des Sägebandes 21 erstreckt. Die Kante 28 liegt unmittelbar neben dem Sägeband 21, wenn der Sägerahmen 7 seine am weitesten heruntergeschwenkte Stellung gemäß Fig. 4 erreicht hat, in der die Zähne des Sägebandes 21 die horizontale Tischfläche des Auflagetisches 27 geradeeben passiert haben, d.h. ihre Spitzen liegen knapp unterhalb der von dem Auflagetisch 27 definierten horizontalen Ebene.

Der abgelängte Teil des Werkstücks wird damit in unmittelbarer Nähe des Sägebandes 21 unterstützt, wenn der Sägerahmen 7 beim Ablängen um die Achse 16 aus einer angehobenen in die in Fig. 4 gezeigte Stellung geschwenkt wird, wobei die auf der einen Seite des Sägebandes 21 laufenden Zähne sich in einer vertikalen Ebene bewegen, die die erste Achse 6 enthält.

Der Spannstock 8 befindet sich bezüglich des Sägerahmens 7 auf der anderen Seite wie der Auflagetisch 27. Er enthält einen starren Backen 32, der fest an dem Maschinengestell 2 angebracht ist. Der starre Backen 32 trägt eine Werkstückanlagefläche 33, die eine Ebene definiert, die ebenfalls die erste Achse 6 enthält. Seine vertikal verlaufende Vorderkante 34 liegt knapp vor der ersten Achse 6; von hier aus erstreckt sich der Backen 32 von dem Sägerahmen 7 weg.

Mit dem starren Backen 32 wirkt ein beweglicher Backen 35 zusammen, der in einem Spannstockbett 36 längsverschieblich geführt ist. Das Bett 36 besteht aus zwei zueinander parallelen länglichen Wangen 37, deren Oberseiten 38 auf gleicher Höhe liegen und die an ihrer Unterseite 39 stoffschlüssig oder sonstwie starr miteinander verbunden sind. Zwischen den beiden Wangen 37 ist in bekannter Weise der bewegliche Backen 37 parallelgeführt und kann in Richtung senkrecht zu der Anlagefläche 33 auf den feststehenden Backen 32 zu- bzw. von diesem wegbewegt werden. Zum Bewegen des Backens 35 ist ein zweiseitig wirkender Arbeitszylinder 4O vorgesehen, der an demjenigen Ende des Bettes 36 angeflanscht ist, das von dem feststehenden Backen 32 abliegt.

Die Oberseiten 38 der beiden Wangen 37 liegen auf derselben Höhe wie die Tischfläche des Auflagetisches 27 auf der anderen Seite des Sagerahmens 7. Ein zu bearbeitendes Werkstück liegt deswegen beidseits des Sägerahmens 7 einerseits auf dem Auflagetisch 27 und andererseits auf den Oberseiten 38 des Bettes 36 auf.

Das Bett 36 ist auf dem Maschinengestell 2 längs einer zweiten Achse längsverschieblich gelagert. Letzteres trägt auf seiner Oberseite 41 hierzu zwei aufgeständerte Führungsschienen 42, die parallel und im Abstand zueinander verlaufen. Beim gezeigten Ausführungsbeispiel befinden sie sich obendrein auf derselben Höhe. Die beiden Führungsschienen 42 erstrecken sich rechtwinklig zu dem Bett 36 und rechtwinklig zu jener Ebene, die die Achse 6 enthält und die senkrecht auf der Anlagefläche 33 des feststehenden Backens 32 steht. Sie beginnen etwa bei dieser Ebene und laufen vor bzw. unterhalb des festen Backens 32 von dem Schwenkträger 5 weg. Auf den beiden Führungsschienen 42 laufen zwei Kugelführungseinrichtungen 43, die an der Unterseite 39 des Bettes 36 angebracht sind. Auf diese Weise läßt sich der bewegliche Backen 35 vor dem festen Backen 32 hin- und herbewegen. Damit in jedem Falle eine Werkstückklemmung zustandekommt, hat der feststehende Backen 32 eine Längserstreckung parallel zu den Führungsschienen 43, die so groß ist, daß die Projektion des in seinen Breitenabmessungen kleineren beweglichen Backens 35 auf die Werkstückspannfläche des feststehenden Backens 32 immer innerhalb der Kanten des feststehenden Backens 32 liegt.

Um das Bett 36 zu bewegen, ist an der dem Schwenkträger 5 benachbarten Wange 37 etwa auf deren Mitte ein gegabelter Fortsatz 44 befestigt, in dem eine Kuppelstange 45 um eine vertikale Achse schwenkbar gelagert ist. Die Kuppelstange 45 ist zylindrisch und steckt in einem Schiebegelenk 46, das an der Plattform 9 des Schwenkträgers 5 angebracht ist, und zwar im Bereich desjenigen Endes der Kante 11, die von der Kante 12 abliegt. Das Schiebegelenk 46 seinerseits ist schwenkbar an der Unterseite der Plattform 9 gehaltert, so daß sich die Kuppelstange 45 bezüglich einer vertikalen Achse gegenüber der Plattform 9 drehen kann.

Das Schiebegelenk 46 besteht aus einem Zylinderstück 47, das eine zylindrische Durchgangsbohrung 48 enthält, in der die Kuppelstange 45 steckt. Das Zylinderstück 47 ist in einem gegabelten Ansatzstück 49 um seine Längsachse drehbar, wobei das gegabelte Ansatzstück an der Unterseite der Plattform 9 befestigt ist.

Im Inneren des Zylinderstücks 47 sitzt eine Kugel, die in Richtung auf das Innere der Bohrung 48 zu federvorgespannt ist und mit einer Ringnut 51 auf der Kuppelstange eine Rasteinrichtung bildet.

Die genaue Lage der Ringnut 51 längs der Kuppelstange 45 ergibt sich aus der nachfolgenden Funktionsbeschreibung.

Wenn ein Werkstück gerade rechtwinklig abgeschnitten werden soll, wird der Schwenkträger 5 in die in Fig. 5 gezeigte Lage gebracht. In der Figur ist der Übersichtlichkeit halber der Sägerahmen 7 weggelassen, der an sich auf der Achse 16 gelagert wäre. In dieser Stellung ist das Bett 36 des Spannstocks 8 soweit wie möglich in Richtung auf die erste Achse 6 verschoben. In dieser Stellung steht der bewegliche Backen 35 in einer Position, in der seine Projektion auf den feststehenden Backen 32 nahe dessen Vorderkante 34 liegt. Der Schwenkträger 5 ist in eine Stellung gebracht, in der die Achse 16 parallel zu der Anlagefläche 33 des feststehenden Backens 32 liegt. Sodann wird der Sägerahmen 7 angehoben, d.h. er wird bezüglich der Achse 16 hochgeschwenkt, wobei er bei einer Ansicht entsprechend Fig. 4 im Uhrzeigersinne um die Achse 16 geschwenkt wird, bis der in dem Materialdurchlaß 18 sichtbare Teil des Sägebandes 21 über dem feststehenden Backen 32 verläuft. Sodann wird in den Spannstock 8 das abzulängende Werkstück eingelegt, das unter dem hochgeschwenkten Sägerahmen 7 hindurchgeführt wird. Es liegt dabei einerseits auf der Oberseite 38 des Bettes 36 und andererseits auf der Auflagefläche des Auflagetisches 27 auf und wird auf diese Weise an zwei Stellen unterstützt. Sodann wird der Antriebszylinder 4O in Gang gesetzt, der den beweglichen Backen 35 in Richtung auf den feststehenden Backen 32 verschiebt, um zwischen den beiden Backen 32, 35 das Werkstück einzuklemmen.

Nachdem solchermaßen das Werkstück in der Metallbandsäge 1 festgelegt ist, wird der Sägerahmen 7 bei kleineren Metallbandsägen 1 von Hand oder durch eine nicht weiter veranschaulichte Antriebseinrichtung um die Achse 16 heruntergeschwenkt, d.h. der Sägerahmen 7 führt, bezogen auf Fig. 4, eine Schwenkbewegung im Gegenuhrzeigersinne durch. Dabei taucht der in dem Materialdurchlaß 18 sichtbare Teil des Sägebandes 21 in das Werkstück ein und trennt es durch. Während der Schnittbewegung bewegen sich die Zähne des Sägebandes 21, wie bereits erläutert, in einer Ebene, die einerseits die erste Achse 6 enthält und andererseits auf der Spannfläche 33 des feststehenden Backens 32 senkrecht steht. Die Ebene ist ebenfalls rechtwinklig bezüglich der Achse des abzulängenden Werkstücks.

Nachdem der Sägerahmen 7 die in Fig. 4 gezeigte Stellung erreicht hat, ist das Werkstück durchgetrennt, denn die Spitzen der Zähne befinden sich knapp unterhalb jener Ebene, in der einerseits die Tischfläche des Auflagetisches 27 und andererseits die Oberseite 38 des Bettes 36 liegen.

Der eine Teil des durchgesägten Werkstücks wird in dem Spannstock 8 gehalten und der andere Teil liegt auf dem Auflagetisch 27 auf.

Bei dem soeben beschriebenen Sägeschnitt steht das Schiebegelenk 46 längs der Kuppelstange 45 an der Stelle der Ringnut 51, so daß die Rasteinrichtung einrasten kann.

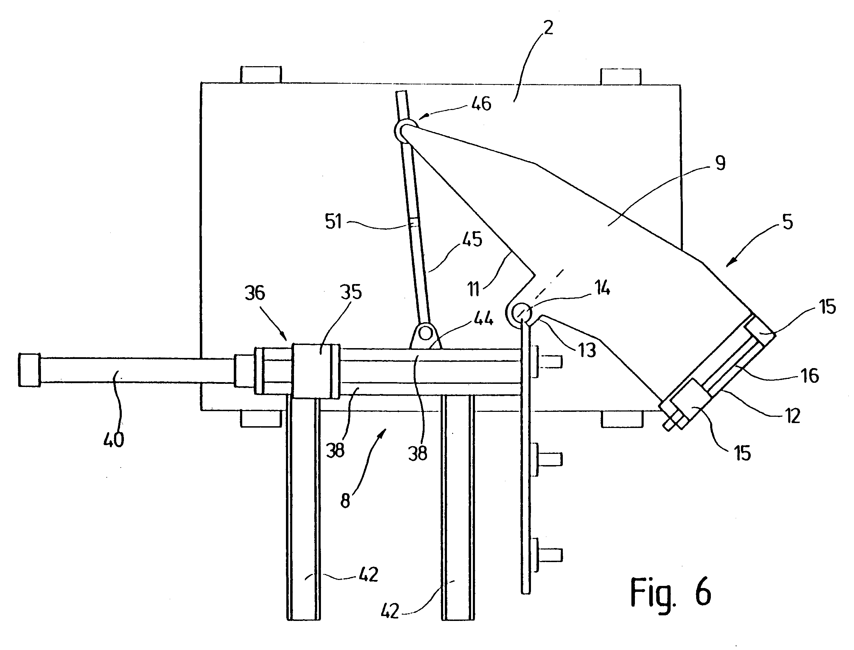

Wenn, ausgehend von der in Fig. 5 gezeigten Stellung, eine Gehrung geschnitten werden soll, bei der die Schnittfläche mit dem feststehenden Backen 32 einen stumpfen Winkel einschließt, wird der Schwenkträger 5, wie Fig. 6 zeigt, ausgehend von der Stellung nach Fig. 5, im Uhrzeigersinne um die erste Achse 6 mehr oder weniger weit herumgeschwenkt. Dabei rastet das Schiebegelenk 46 aus der Ringnut 51 aus, denn das Bett 36 des Spannstocks 8 kann nicht über die in Fig. 5 gezeigte Stellung hinaus bewegt werden. Die Führungsschienen 42 enden unterhalb des Bettes 36, wenn das Bett 36 in der Stellung für einen rechtwinkligen Schnitt steht.

Sobald der Schwenkträger 5 in die dem gewünschten Gehrungsschnitt entsprechenden Schwenkstellung bezüglich der vertikal verlaufenden ersten Achse 6 geschwenkt ist, wird der Schwenkträger 5 durch nicht weiter gezeigte Klemmeinrichtungen in der Position festgeklemmt. Sodann wird, falls dies nicht bereits vorher geschehen ist, wiederum der Sägerahmen 7 hochgeschwenkt, bis der in dem Materialdurchlaß 18 laufende Teil des Sägebandes 21 über dem festen Backen 32 steht. Darauf wird das Werkstück in den Spannstock 8 eingelegt, bis es um das gewünschte Maß über die Ebene übersteht, längs derer sich der aktive Teil des Sägebandes 21 beim Sägen bewegt. Anschließend wird durch Ingangsetzen des Arbeitszylinders 4O der Spannstock 8 geschlossen und das Werkstück festgeklemmt. Gleichzeitig wird mit dem Festklemmen des Werkstücks auch der bewegliche Backen 35 längs der Führungsschienen 42 festgeklemmt. Da das Sägeband 21 längs des aktiven Weges in Richtung auf den feststehenden Backen 32 läuft, braucht der bewegliche Backen 35 auch nicht die beim Sägeschnitt auftretenden Schnittkräfte aufzunehmen. Er kann zusammen mit seinem Bett 36 entsprechend schwach dimensioniert werden. Auch die beiden Führungsschienen 32 brauchen nicht die Schnittkraft auszuhalten, sondern müssen nur soweit dimensioniert werden, daß sie die beim Schließen des Spannstocks 8 maximal auftretenden Spannkräfte aushalten können, da die Reaktionskraft beim Spannen über die Oberseite 41 des Maschinengestells 2 übertragen wird.

Wenn der Schwenkträger 5 in der Stellung nach Fig. 6 steht, befindet sich der Sägerahmen 7 in einer entsprechenden Gehrungsstellung, wie dies Fig. 7 deutlich zeigt. Zusammen mit dem Sägerahmen 7 und dem Schwenkträger 5 wurde der sektorförmige Auflagetisch 27 mit weggeschwenkt. Weil seine Kante 28 immer parallel zu dem aktiven Teil des Sägebandes 21 verläuft, wird das nach dem Abtrennen lose Teil des Werkstücks unmittelbar in der Nähe des Sägebandes 21 unterstützt und kann nicht auf das Maschinengestell 2 herunterfallen.

Wenn ein Gehrungsschnitt erzeugt werden soll, bei dem die Schnittfläche unter einem spitzen Winkel zu dem feststehenden Backen 32 verläuft, wird, ausgehend von Fig. 5, der Schwenkträger 5 im Gegenuhrzeigersinne um den entsprechenden Gehrungswinkel verschwenkt. Da in diesem Falle die Rastung des Schiebegelenks 46 eingerastet ist, wird die Schwenkbewegung des Schwenkträgers 5 auf das Bett 36 übertragen, das entsprechend längs den beiden Führungsschienen 42 von der ersten Achse 6 wegbewegt wird. Die Bewegung längs der beiden Führungsschienen 42 ist eine gerade Verschiebeachse, die rechtwinklig zu der ersten Achse 6 verläuft. Die Niveauverhältnisse zwischen dem Auflagetisch 27 und der Oberseite 38 des Bettes 36 werden dadurch nicht beeinträchtigt.

Durch geeignete Wahl der Lage des Fortsatzes 44 an dem Bett 36 wird erreicht, daß der bewegliche Backen 35 samt seinem Bett 36 nur um soviel verschoben wird, daß beim Absenken des Sägerahmens 7 keine Kollisionen zwischen dem Sägerahmen 7 und dem beweglichen Backen 35 auftreten, und zwar auch dann nicht, wenn ein Werkstück mit den maximalen Querschnittsabmessungen bearbeitet wird.

Daß der Sägerahmen 7,ohne mit dem beweglichen Backen 35 zu kollidieren, heruntergeschwenkt werden kann, zeigt Fig. 9.

Mit Hilfe der Kuppelstange 45 wird zwangsläufig sichergestellt, daß bei Gehrungsschnitten mit spitzem Winkel gegenüber dem festen Backen 32 der bewegliche Backen 35 samt seinem Bett 36 immer gerade um den notwendigen Betrag längs der zweiten Achse, also längs der beiden Führungsschienen 42, wegbewegt wird. Er behindert dadurch nicht die Bewegung des Sägerahmens 6, während andererseits der Ablagetisch 27 der Schwenkbewegung des Schwenkträgers 5 folgt und auch bei solchen Gehrungsschnitten das lose Teil des Werkstücks unmittelbar neben dem Sägeband 21 abgestützt wird.

Ersichtlicherweise können mit der gezeigten Metallbandsäge 1 beide Arten von Gehrungsschnitten ausgeführt werden, nämlich solche, bei denen die Schnittfläche unter einem stumpfen Winkel zu dem festen Backen 32 verläuft, als auch solche, bei denen die Schnittfläche einen spitzen Winkel mit dem festen Backen 32 einschließt. In jedem Falle wird das Werkstück in dem Spannstock 8 so dicht wie irgend möglich neben dem Sägerahmen 7 festgespannt, ohne daß sich der Spannstock 6 bei allen übrigen Gehrungsschnitten in einer Position befinden muß, die dem spitzesten Gehrungswinkel entsprechen würde. Vielmehr folgt der Spannstock 8 beim Verstellen des Schwenkträgers 5 dessen Bewegung solange, bis die 9O^{o}-Stellung erreicht ist. Bei Gehrungsschnitten, deren Winkel stumpfer ist bezüglich des feststehenden Backens 32 als 9O^{o}, bleibt das Bett 36 stehen, da es ohnehin nicht weiter bewegt werden kann, denn der aktive Teil des Sägebandes 31 läuft unmittelbar neben der Vorderkante 34 des festen Backens 32.

Gleichzeitig erfolgt in allen Gehrungsschnittstellungen eine parallele Spannung des Werkstücks und es ist zum Einstellen des Gehrungsschnittes nicht erforderlich, das Werkstück um eine Hochachse zu bewegen.

Weil mit der neuen Säge sowohl spitze als auch stumpfe Gehrungswinkel,jeweils gemessen gegenüber dem festen Backen 32,erzeugt werden können, kann ein Werkstück mit einer Doppelgehrung versehen werden, ohne daß es notwendig ist, das Werkstück nach dem Anbringen des ersten Gehrungsschnittes um seine Längsachse zu drehen. Die neue Metallbandsäge eignet sich deswegen besonders gut für Anwendungsfälle, bei denen mit Hilfe eines automatischen Materialtransports die Werkstücke taktweise vorgeschoben werden und die Werkstücke an zumindest einem Ende eine Doppelgehrung benötigen.

Unabhängig von dem jeweiligen Schnittwinkel, unter dem das Werkstück abgetrennt werden soll, bewegt sich der bewegliche Backen 35 längs einer Achse, die auf dem festen Backen 32 senkrecht steht.

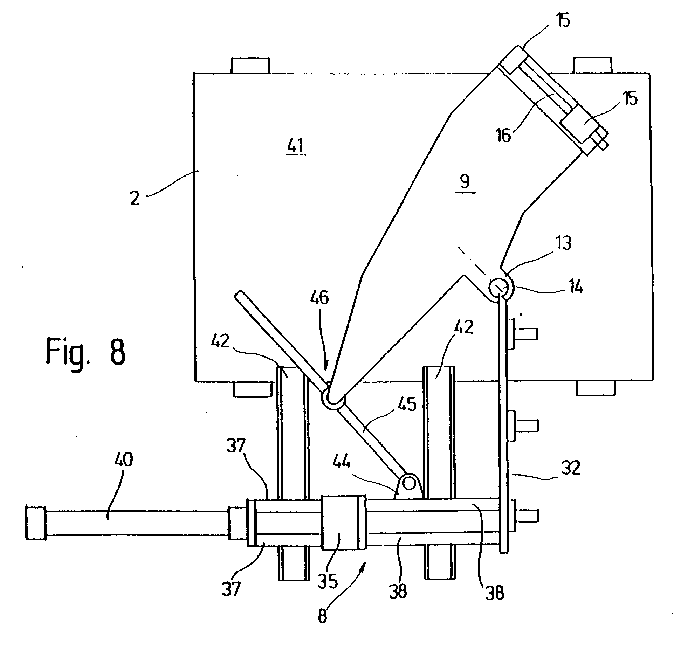

Wenn die insoweit dargestellte und erläuterte Metallbandsäge 1 mit einem automatischen Materialvorschub ausgerüstet wird, ist unabhängig von dem Gehrungsschnittwinkel die Länge des kleinsten automatisch vorzuschiebenden Werkstückes durch die Länge des starren Backens 32 festgelegt. Eine automatische Vorschubeinrichtung für das Werkstück kann an den Spannstock 8 nicht näher herangebracht werden, als es der Länge des starren Backens 32, gemessen in Richtung parallel zu der zweiten Achse entspricht. Diese Backenlänge ergibt sich aus dem spitzesten Gehrungswinkel, bei dem, wie Fig. 8 bzw. 9 zeigt, der Sägerahmen 7 am weitestens im Uhrzeigersinne auf den starren Backen 32 hingeschwenkt ist, so daß das Bett 36 des Spannstocks 8 die Extremlage einnimmt. Auch in dieser Extremlage muß dem beweglichen Backen 35 noch ein entsprechender Abschnitt des starren Backens 32 gegenüberstehen.

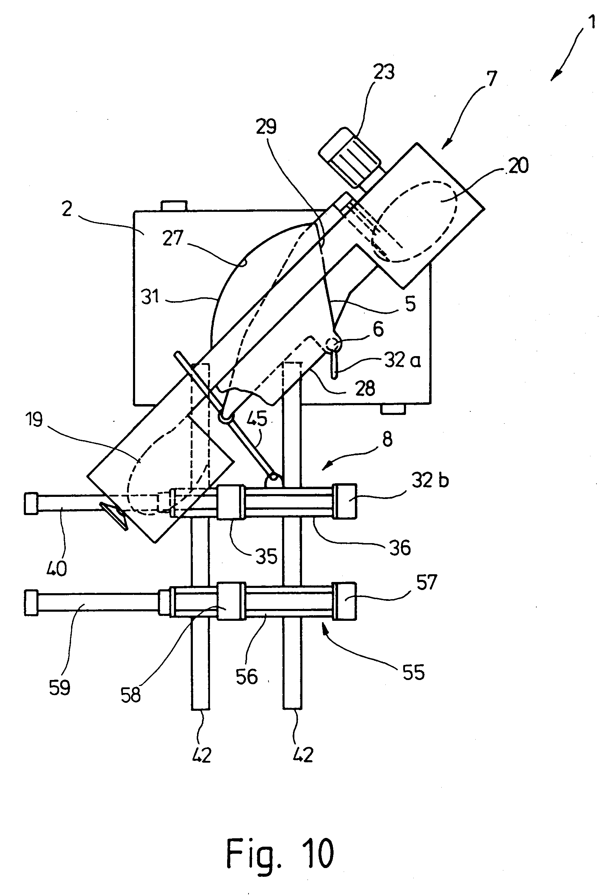

Wenn diese minimal erforderliche Werkstücklänge bei automatischer Werkstückzufuhr für 90°-Schnitte verkürzt werden soll, ist bevorzugt die in Fig. 10 dargestellte Ausführungsform zu verwenden. Bei dieser Ausführungsform sind alle bereits bei dem vorherigen Ausführungsbeispiel erläuterten Maschinenteile sowie die homologen Maschinenteile mit denselben Bezugszeichen versehen. Sie werden nicht erneut beschrieben, sondern es wird auf die vorstehende Beschreibung verwiesen.

Das Ausführungsbeispiel nach Fig. 10 unterscheidet sich von dem vorherigen Ausführungsbeispiel dadurch, daß der starre Backen 32 in zwei Abschnitte 32a und 32b aufgeteilt ist. Der Backenabschnitt 32a befindet sich unmittelbar neben der Drehachse 6 und erstreckt sich, wie gehabt, mit seiner Spannfläche parallel zu der zweiten Achse, die durch die Führungsschienen 42 definiert ist, in Richtung auf den beweglichen Spannstock 8. Der Backenabschnitt 32a ist ortsfest und starr an dem Maschinengestell 2, wie dies bereits erläutert ist.

Der zweite Backenabschnitt 32b des starren Backens ist abweichend von dem vorhergehenden Ausführungsbeispiel starr und ortsfest auf dem Spannstockbett 36 befestigt, und zwar so, daß seine Spannfläche für das Werkstück mit der Spannfläche des Backenabschnitts 32a in einer gemeinsamen Ebene liegt. Diese Ebene entspricht der Ebene, in der die Spannfläche des starren Backens 32 nach dem vorherigen Beispiel liegen würde.

Fur die automatische Materialzufuhr sitzt längsverschieblich auf den beiden Führungsschienen 42 ein weiterer Spannstock 51, der im Grunde genommen denselben Aufbau hat, wie der Spannstock 8. Der Spannstock 55 weist ein Spannstockbett 56 auf, das mit Hilfe von Kugelführungen auf den beiden Führungsschienen 42 geführt ist. An einem Ende des Spannstockbettes 56 befindet sich ein feststehender Backen 57, dem sich ein beweglicher zustellbarer Backen 58 gegenüber befindet. Die Betätigung des beweglichen Backens 58 geschieht mit Hilfe eines zweiseitig wirkenden Hydraulik- oder Pneumatikzylinders 59, durch den der Backen 58 in Richtung auf den feststehenden Backen 57 zu vorschiebbar oder von diesem wegzuziehen ist. Mittels einer weiteren nicht dargestellten Antriebseinrichtung kann der Spannstock 55 gesteuert um definierte Wege längs den beiden Führungsschienen 42, also längs der zweiten Achse verstellt werden.

Die Arbeitsweise mit der in Fig. 10 dargestellten Metallbandsäge 1 geschieht wie folgt: zunächst wird durch Verschwenken des Schwenkträgers 5 der Gehrungsschnittwinkel eingestellt, wobei sich, die vorher erläutert, das Spannstockbett 36 entsprechend dem Gehrungsschnittwinkel längs der zweiten Achse verschiebt, damit einerseits der Spannstock 8 so dicht wie irgendmöglich, neben dem Sägeband 21 steht, andererseits das Sägeband 21 aber nicht mit Teilen des Spannstocks 8 kollidiert. Sodann werden die beiden Spannstöcke 8 und 55 geöffnet und es wird in die geöffneten Spannstöcke das abzulängende Werkstück eingelegt, wobei es an seinem auskragenden Ende auf den Oberseiten der beiden Spannstockbetten 36 und 56 aufliegt. Im übrigen liegt das nicht veranschaulichte Werkstück auch noch auf einem entsprechenden Rollengang auf, dessen wirksame Tischfläche mit der Auflagefläche, die durch die Spannstockbetten 36 und 56 definiert ist, in einer gemeinsamen Ebene liegt.

Durch Schließen des Spannstocks 55 mit Hilfe des Arbeitszylinders 59 wird das Werkstück in diesem Spannstock 55 festgeklebt. Der Spannstock 55 läßt sich nun zusammen mit dem von ihm ergriffenen Werkstück längs der zweiten Achse bewegen, wobei entsprechend der Bewegung das Werkstück vorgeschoben wird. Sobald der gewünschte Materialvorschub erreicht ist, wird die Bewegung des Spannstocks 55 längs der zweiten Achse gestoppt, was spätestens dann der Fall sein muß, wenn der Spannstock 55 unmittelbar seitlich neben dem Spannstock 8 liegt.

Für die weitere Erläuterung sei angenommen, daß ein einfacher Vorschubhub des Spannstocks 55 ausreicht, um genügend Materiallänge in die Metallbandsäge 1 einzuführen. Nachdem der Spannstock 55 stillgesetzt ist, wird der Spannstock 8 durch Betätigen des Arbeitszylinders 44 geschlossen, d.h. das Werkstück wird nun zwischen dem beweglichen Backen 35 und dem starren Backenabschnitt 32b eingeklemmt. Gleichzeitig liegt auch das Werkstück an dem starren Backenabschnitt 32a an, d.h. es wird in unmittelbarer Nähe des Sägebandes 21 abgestützt, wenn das Sägeband 21 zwecks Abschneiden des Werkstücks mit diesem in Eingriff kommt. Die Sägebewegung des Sägebandes 21 ist in Richtung auf den starren Backen 32a gerichtet, so daß sich das Werkstück, das bei der Einstellung nach Fig. 10 weit über den Backenabschnitt 32b übersteht, dennoch in der Nähe des Sägebandes 31 abgestützt ist.

Da die Spannflächen des Backenabschnitts 32a, des Backenabschnitts 32b und des feststehenden Backens 57 allesamt in einer gemeinsamen Ebene liegen, entsteht beim Öffnen und Schließen der Spannstöcke 8 und 55 keine Bewegung des Werkstücks.

Sollte der mit einem Hub des Spannstocks 55 erfolgende Materialtransport nicht ausreichen, kann nach Schließen des Spannstocks 8 und Öffnen des Spannstocks 55 letztere wieder in die Ausgangslage zurückgeführt werden, also in die Stellung, in der er den größten Abstand von dem Spannstock 8 hat. Sodann wird von der Steuerung der Metallbandsäge 1 der Spannstock 55 geschlossen und der Spannstock 8 geöffnet, damit eine erneute Vorschubbewegung mit Hilfe des Spannstocks 55 möglich ist. Dieses Spiel des Erfassens des Werkstücks mit Hilfe des Spannstocks 8 beim Rücklaufs 55 und des Erfassens mit dem Spannstock 55 beim Vorschub des Werkstücks wird so lange durchgeführt, bis die gewünschte Materialmenge unter dem Sägerahmen 7 hindurchtransportiert ist.

Wenn hingegen ausgehend von der Extremstellung nach Fig. 10 ein Gehrungsschnitt erforderlich ist, der näher bei 90° liegt, bewegt sich der Spannstock mit seinem Spannstockbett 36 und dem darauf sitzenden starren Backenabschnitt 32b näher an den starren Backenabschnitt 32a heran. Dadurch ist ein größerer Transporthub des Spannstocks 55 möglich d.h. andererseits auch, daß die kleinste Materiallänge, die mit Hilfe des Spannstocks 55 noch transportiert werden kann, entsprechend schrumpft. Im Falle eines 90°-Schnittes steht der Spannstock 8 in einer Position, in der der Backenabschnitt 32b an den Backenabschnitt 32a praktisch anstößt. Somit ist die kleinste erforderliche Materiallänge für Schnitte von 90° oder Gehrungsschnitte größer als 90° gleich der Summe der Breiten der beiden Backenabschnitte 32a und 32b zuzüglich einem Rest, der erforderlich ist, damit das Werkstück von dem Spannstock 55 erfaßt werden kann.

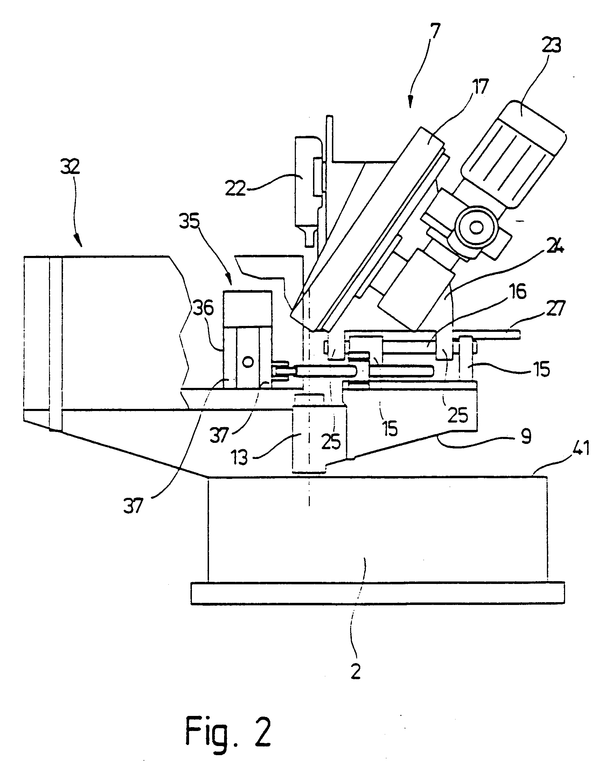

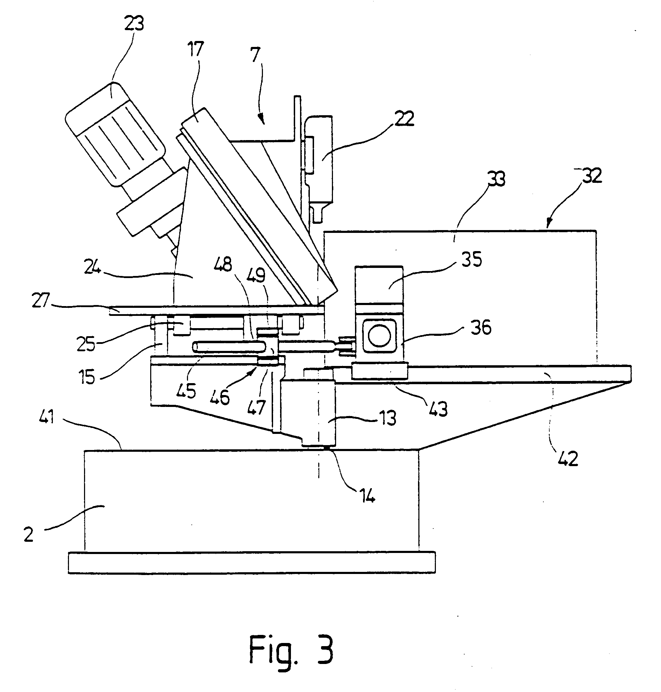

Verglichen mit der Ausführungsform nach den Fig. 1-9, bei dem der Spannstock 8 einen starren und in der Länge unveränderlichen Backen aufweist, hat die Ausführungsform nach Fig. 10 einen starren Backen 32, dessen Erstreckung parallel zur zweiten Achse von der Schnittwinkeleinstellung abhängig ist. Dadurch werden bei automatischer Werkstückzufuhr die Restlängen, die automatisch nicht mehr zugeführt werden können, deutlich verkürzt. Jedoch wird in Jedem Falle sichergestellt, daß das Werkstück unmittelbar neben dem Sägeband 21 gegenüber dem auftretenden Schnittkräften abgestützt wird und nicht zum Schwingen neigt. Da außerdem bei beiden Ausführungsformen der bewegliche Backen 35 immer senkrecht zu der Spannfläche des starren Backens 32 bzw. 32a, 32b zugestellt wird, besteht für das Werkstück keine Tendenz, daß es bei Gehrungsschnitten infolge der beim Sägen auftretenden Schwingungen längs der zweiten Achse zum verrutschen neigt, was zu einem unsauberen Sägeschnitt und einer ungenauen nicht maßhaltigen Ablängung führen würde.

## Patentansprüche

1. Horizontale Metallbandssäge (1) zum Gehrungsschneiden von länglichen Werkstücken,
mit einem Maschinengestell (2), auf dem ein Schwenkträger (5) um eine vertikale Achse (6) schwenkbar gelagert ist,
mit einem Sägerahmen (7), der in dem Schwenkträger (5) in einer Ebene beweglich gelagert ist, die zu der vertikalen Achse parallel ist, und
mit einem zwei Spannbacken (32,35) aufweisenden Spannstock (8), wobei die eine Spannbacke (32) eine Spannfläche aufweist und gestellfest ist, während die andere Spannbacke (35) auf einem Spannstockbett (36) längs dessen Achse verschieblich geführt ist und das Spannstockbett (36) an dem Maschinengestell (2) beweglich angeordnet ist,
dadurch gekennzeichnet,
daß das Maschinengestell (2) mit einer Längsführung (42,43) versehen ist, deren Längsachse parallel zu der Spannfläche der gestellfesten Spannbacke (32) liegt,
daß mittels der Längsführung (42,43) das Spannstockbett (8) verstellbar ist, derart, daß die Achse des Spannstockbettes (8) bei jeder Gehrungseinstellung rechtwinkelig zu der Spannfläche der gestellfesten Spannbacke (32) liegt,
daß an dem Maschinengestell (2) im Bereich des Spannstocks (8) ein eine Werkstückauflagefläche bildender Auflagetisch (36) vorhanden ist, der in Längsführungen (42) längsverschieblich geführt ist, und
daß die Verschiebebewegung des Auflagetisches (36) parallel zu der Werkstücklängsachse liegt.

2. Metallbandsäge nach Anspruch 1, dadurch gekennzeichnet, daß der Sägerahmen (7) in dem Schwenkträger (5) um eine Achse (16) schwenkbar ist, die rechtwinklig zu der vertikalen Achse (6) verläuft.

3. Metallbandsäge nach Anspruch 1, dadurch gekennzeichnet, daß der Sägerahmen (7) in dem Schwenkträger (5) längsverschieblich geführt ist und daß die Verschiebeachse parallel zu der vertikalen Achse (6) liegt.

4. Metallbandsäge nach Anspruch 1 , dadurch gekennzeichnet, daß der Schwenkträger (5) einen mit ihm starr verbundenen Tisch (27) mit einer Werkstückauflagefläche trägt.

5. Metallbandsäge nach Anspruch 1, dadurch gekennzoichnet, daß der längsverschiebliche Auflagetisch (36) auf denselben Führungen (42) wie der entsprechende Teil des Spannstocks (8) geführt ist.

6. Metallbandsäge nach Anspruch 1, dadurch gekennzeichnet, daß der längsverschiebliche Auflagetisch (36) Teil des Snannstocks ( 8) ist.

7. Metallbandsäge nach den Ansprüchen 1 und 5, dadurch gekennzeichnet, daß das Spannstockbett (36) eine Oberseite (38) aufweist, die die Werkstückauflagefläche des längsverschieblichen Auflagetisches darstellt.

8. Metallbandsäge nach Anspruch 1, dadurch gekenzizeichnet, daß das Spannstockbett (36) auf Führungsschienen (42) mit Kugelführungen (43) geführt ist.

9. Metallbandsäge nach Anspruch 1, dadurch gekennzeichnet, daß zur Verstellung des Spannstocks (8) längs der Werkstücklängsachse eine Antriebseinrichtung (45) vorgesehen ist.

10. Metallbandsäge nach Anspruch 9, dadurch gekennzeichnet, daß die Antriebseinrichtung von einer Kuppelstange (45) gebildet ist, die einenends mit dem Spannstock (8) oder einem Teil davon gelenkig verbunden ist und anderenends mit dem Schwenkträger (5 ) gekuppelt ist.

11. Metallbandsäge nach Anspruch 10, dadurch gekennzeichnet, daß die Kuppelstange (45) an ihrem einen Ende lediglich schwenkbar und an ihrem anderen Ende schwenkbar und begrenzt längsverschieblich angelenkt ist.

12. Metallbandsäge nach Anspruch 11, dadurch gekennzeichnet, daß im Bereich der längsverschieblichen Anlenkung eine Rasteinrichtung (51) vorhanden ist.

13. Metallbandsäge nach Anspruch 12, dadurch gekennzeichnet, daß die Rasteinrichtung (51) längs der Kuppelstange (45) an jener Stelle wirksam ist, in der der Spannstock (8) am nächsten an die erste Achse (5) heranbewegt ist, während sich der Schwenkträger (5) in einer Stellung befindet, in der das Sägeband (21) in einer Ebene wirksam ist, die auf dem festen Backen (23) senkrecht ist.

14. Metallbandsäge nach Anspruch 13, dadurch gekennzeichnet, daß die Rasteinrichtung (51) von einer in der Kuppelstange (45) befindlichen Nut (51) und einem Kugelschnäpper in einen mit der Kuppelstange zusammenwirkenden Verschiebeteil (47) gebildet ist.

## Claims

1. Horizontal metal cutting band saw (1) for mitre cutting elongated workpieces,
with a machine frame (2), on which a swivel support (5) is mounted to swivel around a vertical axis (6),
with a saw frame (7) mounted in the swivel support (5) to move in a plane parallel to the vertical axis,
and with a vice (8) with two clamping jaws (32, 35), one of said clamping jaws (32) having a clamping surface and being fixed to the frame, whereas the other clamping jaw (35) is guided on a vice base (36) to slide along its axis and the vice base (36) is arranged to move on the machine frame (2),
characterised in that
the machine frame (2) is provided with a longitudinal guide (42, 43), the longitudinal axis of which lies parallel to the clamping surface of the clamping jaw (32) fixed to the frame;
that the vice base (8) may be displaced by means of the longitudinal guide (42, 43) in such a way that on each mitre adjustment, the axis of the vice base (8) lies perpendicular to the clamping surface of the clamping jaw (32) fixed to the frame;
that a supporting table (36) forming a workpiece support surface is provided on the machine frame (2) in the area of the vice (8), said supporting table being guided to slide longitudinally in longitudinal guides (42);
and that the sliding movement of the supporting table (36) is parallel to the longitudinal axis of the workpiece.

2. Metal cutting band saw according to Claim 1,
characterised in that the saw frame (7) may be swivelled in the swivel support (5) around an axis (16) running perpendicular to the vertical axis (6).

3. Metal cutting band saw according to Claim 1,
characterised in that the saw frame (7) is guided to slide longitudinally in the swivel support (5); and that the sliding axis is parallel to the vertical axis (6).

4. Metal cutting band saw according to Claim 1,
characterised in that the swivel support (5) supports a table (27) rigidly connected to it having a workpiece support surface.

5. Metal cutting band saw according to Claim 1,
characterised in that the longitudinally sliding supporting table (36) is guided on the same guides (42) as the corresponding part of the vice (8).

6. Metal cutting band saw according to Claim 1,
characterised in that the longitudinally sliding supporting table (36) is a part of the vice (8).

7. Metal cutting band saw according to Claims 1 and 5,
characterised in that the vice base (36) has an upper side (38) which constitutes the workpiece support surface of the longitudinally sliding supporting table.

8. Metal cutting band saw according to Claim 1,
characterised in that the vice base (36) is guided on guide rails (42) with ball bearings (43).

9. Metal cutting band saw according to Claim 1,
characterised in that a drive means (45) is provided for displacement of the vice (8) along the longitudinal axis of the workpiece.

10. Metal cutting band saw according to Claim 9,
characterised in that the drive means is formed by a draw bar (45), which is pivotally connected at one end to the vice (8) or a part thereof and at the other end is coupled to the swivel support (5).

11. Metal cutting band saw according to Claim 10,
characterised in that the draw bar (45) is coupled only to swivel at its one end and at its other end is coupled to swivel and slide longitudinally to a limited degree.

12. Metal cutting band saw according to Claim 11,
characterised in that a catch means (51) is provided in the area of the longitudinally sliding coupling.

13. Metal cutting band saw according to Claim 12,
characterised in that the catch means (51) is effective along the draw bar (45) at the point where the vice (8) is moved closest to the first axis (5), whereas the swivel support (5) is located in a position in which the sawing band (21) is effective in a plane perpendicular to the fixed jaw (23).

14. Metal cutting band saw according to Claim 13,
characterised in that the catch means (51) is formed by a groove (51) located in the draw bar (45) and a ball catch in a sliding part (47) cooperating with the draw bar.

## Revendications

1. Scie à ruban (1) horizontale pour métaux, pour la coupe biaise de pièces allongées, comportant
un bâti (2) de machine sur lequel un support (5) pivotant est monté pivotant autour d'un axe (6) vertical,
un cadre (7) de scie qui est monté sur le support (5) pivotant avec possibilité de déplacement dans un plan parallèle à l'axe vertical et
un bloc de serrage (8) pourvu de deux mors de serrage (32, 35), l'un (32) des mors présentant une surface de serrage et étant monté fixe sur le bâti tandis que l'autre (35) mors est guidé sur un berceau (36) de bloc de serrage, le long de l'axe de ce dernier et que le berceau (36) de bloc de serrage est monté mobile sur le bâti (2) de machine,
caractérisé par la fait
que le bâti (2) de machine est pourvu de moyens (42, 43) de guidage longitudinal dont l'axe longitudinal est parallèle à la surface de serrage du mors (32) solidaire du bâti,
qu'à l'aide des moyens (42, 43) de guidage longitudinal, le berceau (36) de bloc de serrage peut être déplacé de manière telle que, pour chaque réglage de la coupe biaise, l'axe du berceau (36) de bloc de serrage soit perpendiculaire à la surface de serrage du mors (32) solidaire du bâti,
qu'il est prévu sur le bâti (2) de machine, dans la région du bloc de serrage (8), une table (36) qui forme un support pour la pièce et est guidée avec possibilité de déplacement en translation sur les moyens (42) de guidage longitudinal et
que le déplacement en translation de la table-support (36) a lieu parallèlement à l'axe longitudinal de la pièce.

2. Scie à ruban pour métaux selon la revendication 1, caractérisée par le fait que le cadre de scie (7) peut pivoter dans le support pivotant (5) autour d'un axe (16) qui est perpendiculaire à l'axe (6) vertical.

3. Scie à ruban pour métaux selon la revendication 1, caractérisée par le fait que le cadre de scie (7) est guidé sur le support pivotant (5) avec possibilité de déplacement en translation et que l'axe de déplacement est parallèle à l'axe vertical (6).

4. Scie à ruban pour métaux selon la revendication 1, caractérisée par le fait que le support pivotant (5) porte une table (27) qui est liée rigidement audit support et comporte une surface d'appui pour la pièce.

5. Scie à ruban pour métaux selon la revendication 1, caractérisée par le fait que la table-support (26) mobile en translation est guidée sur les mêmes moyens de guidage (42) que la partie correspondante du bloc de serrage (8)

6. Scie à ruban pour métaux selon la revendication 1, caractérisée par le fait que la table-support (36) mobile en translation fait partie du bloc de serrage (8).

7. Scie à ruban pour métaux selon les revendications 1 et 5, caractérisée par le fait que le berceau (36) de bloc de serrage présente un côté supérieur (38) qui constitue la surface d'appui pour la pièce de la table-support mobile en translation.

8. Scie à ruban pour métaux selon la revendication 1, caractérisée par le fait que le berceau (36) de bloc de serrage est guidé sur des rails de guidage (42) avec des glissières à billes (43).

9. Scie à ruban pour métaux selon la revendication 1, caractérisée par le fait qu'il est prévu un dispositif d'entraînement (45) pour déplacer le bloc de serrage (8) suivant l'axe longitudinal de la pièce.

10. Scie à ruban pour métaux selon la revendication 9, caractérisée par le fait que le dispositif d'entraînement est constitué par une tige d'accouplement (45) dont une extrémité est reliée de manière articulée au bloc de serrage (8) ou à une partie de celui-ci et dont l'autre extrémité est couplée au support (5) pivotant.

11. Scie à ruban pour métaux selon la revendication 10, caractérisée par le fait que la tige d'accouplement (45) est montée exclusivement pivotante à l'une des ses extrémités, tandis qu'elle est montée pivotante, avec possibilité de coulissement limité, à son autre extrémité.

12. Scie à ruban pour métaux selon la revendication 11, caractérisée par le fait qu'un dispositif d'encliquetage (51) est disposé dans la région de l'articulation coulissante.

13. Scie à ruban pour métaux selon la revendication 12, caractérisée par le fait que le dispositif d'encliquetage (51) agit le long de la tige d'accouplement (45) au point où le bloc de serrage (8) s'approche au plus près du premier axe (5) lorsque le support pivotant (5) occupe une position dans laquelle le ruban de scie (21) agit dans un plan qui est perpendiculaire au mors fixe (23).

14. Scie à ruban pour métaux selon la revendication 13, caractérisée par le fait que le dispositif d'encliquetage (51) est constitué par une rainure (51) aménagée dans la tige d'accouplement (45) et par un moyen d'encliquetage à bille dans un élément coulissant (47) qui coopère avec la tige d'accouplement.
